Europäisches Patentamt

European Patent Office

Office européen des brevets

(11) Veröffentlichungsnummer: **0 341 599**

**A1**

## EUROPÄISCHE PATENTANMELDUNG

(21) Anmeldenummer: 89108132.5

(51) Int. Cl.⁴ **A21C 11/12**

(22) Anmeldetag: 05.05.89

(30) Priorität: 10.05.88 DE 3816037
29.09.88 DE 3833116

(43) Veröffentlichungstag der Anmeldung:
15.11.89 Patentblatt 89/46

(84) Benannte Vertragsstaaten:
AT BE ES FR GB IT LU NL

(71) Anmelder: Grubelnik Maschinenbau für
Bäckereitechnik GmbH
Am Werbering 2a
D-8011 Kirchheim/Heimstetten(DE)

(72) Erfinder: Grubelnik, Hans
Waldschulstrasse 44
D-8000 München 82(DE)

(74) Vertreter: Zinnecker, Armin, Dipl.-Ing. et al
Rechtsanwälte Eduard Lorenz - Dipl.-Ing.
Hans-K. Gossel Dr. Ina Philipps - Dr. Paul B.
Schäuble Dr. Siegfried Jackermeier Dipl.-Ing.
Armin Zinnecker
Widenmayerstrasse 23 D-8000 München
22(DE)

(54) Gebäck-Einschneidevorrichtung.

(57) Eine Gebäck-Einschneidevorrichtung dient zum Einschneiden von Teigstücken an ihrer Oberfläche. Damit eine derartige Vorrichtung einfach und kostengünstig aufgebaut und betrieben werden kann, ist ein horizontales Förderband (2) zum Fördern der Teigstücke (31), vorzugsweise in mehreren nebeneinander liegenden Reihen, vorgesehen. Mehrere Messer (17) sind über die Breite des Förderbandes (2) verteilt und von diesem beabstandet (a) angeordnet. Ein Antrieb (11) dient zum Antreiben der Messer (17). Die Messer (17) sind auf das Förderband (2) zu und von diesem weg bewegbar.

FIG.1

EP 0 341 599 A1

## Gebäck-Einschneidevorrichtung

Die Erfindung betrifft eine Gebäck-Einschneidevorrichtung zum Einschneiden von Teigstücken an ihrer Oberfläche.

Bei der Gebäckherstellung kann es erforderlich werden, Teigstücke an ihrer Oberfläche einzuschneiden, um den fertigen Teigstücken das gewünschte Aussehen zu geben. Bei der Herstellung vom beispielsweise Baguettes ist es erforderlich, mehrere im wesentlichen parallele, beabstandete, schräge Einschnitte an der Oberseite des länglichen Teigstücks anzubringen.

Aufgabe der Erfindung ist es, eine einfach und kostengünstig herstellbare und betreibbare Gebäck-Einschneidevorrichtung zum Einschneiden von Teigstücken an ihrer Oberfläche zu schaffen.

Erfindungsgemäß wird diese Aufgabe gelöst durch ein horizontales Förderband zum Fördern der Teigstücke vorzugsweise in mehreren nebeneinander liegenden Reihen, mehrere Messer, die über die Breite des Förderbandes verteilt und von diesem beabstandet angeordnet sind, und einen Antrieb zum Antreiben der Messer wobei die Messer auf das Förderband zu und von diesem weg bewegbar sind.

Die auf dem horizontalen Förderband liegenden Teigstücke können zunächst in eine Position unterhalb der Messer gebracht werden. Anschließend werden die Messer auf das Förderband zu bewegt. Die Messer können also in die Teigstück-Oberfläche einschneiden. Anschließend werden die Messer wieder von dem Förderband wegbewegt, also außer Eingriff gebracht. Die Messer bestehen vorzugsweise aus um je eine vorzugsweise horizontale Achse rotierenden Scheiben, die an ihrer Außenumfangsfläche eine oder mehrere Schneiden tragen. Die Messer sind über die Breite des Förderbandes verteilt und von diesem beabstandet angeordnet. Es ist also möglich, bei jeder Absenkbewegung der Messer einen oder mehrere Einschnitte anzubringen. Je nach Art der Anordnung können pro Teigstück ein oder mehrere Einschnitte vorgenommen werden. Ein Antrieb dient zum Antreiben der Messer bzw. der Messerwellen, auf denen sich die Messerscheiben befinden. Vorzugsweise ist ein Getriebe vorgesehen, durch das die Bewegung bzw. Drehbewegung der Messer miteinander gekoppelt ist. Es ist also nicht erforderlich, daß jedes Messer einen eigenen Antrieb bzw. einen eigenen Antriebsmotor besitzt. Vorzugsweise genügt ein einziger Antriebsmotor für sämtliche, beispielsweise 30, Messer. Vorzugsweise sind die Messer als rotierende Messer ausgestaltet, die um je eine vorzugsweise horizontale Achse drehbar sind. Es ist aber auch möglich, andere Messer vorzusehen wie beispielsweise hin- und hergehende Messer mit einer oder zwei Klingen.

Vorzugsweise sind die Messer in einer senkrecht zur Förderrichtung der Teigstücke verlaufenden Reihe angeordnet. Dies ist die einfachste Art der Ausgestaltung. Die Teigstücke liegen dann ebenfalls in einer Reihe senkrecht zur Förderrichtung des Förderbandes auf diesem.

Vorzugsweise weisen die Messer jeweils den gleichen Abstand von dem Förderband auf. Hierdurch ergeben sich bei gleichen bzw. gleichhohen Teigstücken gleiche Einschnittiefen. Vorzugsweise ist der Abstand der Messer von dem Förderband verstellbar. Hierdurch kann die Einschnittiefe verändert werden. Die gesamte Vorrichtung kann dadurch weiterhin auf verschiedene Teigstücke und oder unterschiedliche Teigstück-Höhen eingestellt werden.

Nach einer vorteilhaften Weiterbildung verlaufen die Messer-Drehachsen im Winkel zur Förderrichtung der Teigstücke. Hierdurch ist es möglich, in Bezug auf die Teigstücke bzw. die Teigstück-Längsachsen schräg verlaufende Einschnitte anzubringen und derart das charakteristische Aussehen von beispielsweise Baguettes zu erzeugen. Weiterhin wird es durch diese Ausgestaltung ermöglicht, daß die Einschnitt-Enden einander überlappen bzw. überdecken.

Das die Messer-Drehbewegungen koppelnde Getriebe besteht vorzugsweise aus Zahnrädern und oder Zahnriemen. Grundsätzlich ist es auch möglich, andere Getriebeformen vorzusehen. Das Getriebe kann beispielsweise auch durch Keilriemen realisiert werden. Wenn sehr viele Messer von einem einzigen Antrieb angetrieben werden sollen kann es jedoch vorkommen, daß aufgrund des unvermeidlichen Schlupfes bei Keilriemen-Getrieben die Messer-Drehzahl von Messer zu Messer abnimmt, bis am Ende der durch das Getriebe verbundenen Messerreihe kein ausreichendes Drehmoment bzw. keine ausreichende Drehzahl mehr zur Verfügung steht; im Extremfall dreht sich das letzte Messer der Reihe überhaupt nicht mehr. Daher ist es vorteilhaft, ein die Drehzahl konstant haltendes Getriebe vorzusehen. Auch Kettentriebe können sich dafür eignen. Zahnriemen werden jedoch bevorzugt, da sie leiser sind als Ketten und keiner Wartung bedürfen.

Vorzugsweise sind jeweils mehrere Messer zu einer Messergruppe zusammengefaßt. Die jeweilige Messergruppe kann zur Bearbeitung eines Teigstücks dienen. Die Drehbewegungen der Messer einer Messergruppe können durch ein mit der jeweils zugehörigen Messerwelle fest verbundenes Zahnrad gekoppelt sein. Weiterhin ist es vorteilhaft, wenn jeweils eines der Messer jeder Messergruppe mit jeweils einem Messer der nachfolgenden Messergruppe durch ein Getriebe, vorzugsweise ein Zahnriemen-Getriebe, verbunden ist. Die Messer jeder Gruppe sind also untereinander durch ein Zahnradgetriebe verbunden, während die Kraftübertragung zur nächsten Messergruppe durch ein Getriebe, vorzugsweise ein Zahnriemen-Getriebe, erfolgt.

Vorzugsweise sind die Messer mit einem Rahmen verbunden, der um eine gestellfeste, horizontale Achse drehbar gelagert ist. Durch eine Drehbewegung um diese Rahmendrehachse können die Messer von dem Förderband weg und auf dieses zu bewegt werden, also in Eingriff und wieder außer Eingriff gebracht werden. Es sind jedoch auch andere Bewegungsmöglichkeiten für die Messer bzw. den diese tragenden Rahmen möglich. Die Drehung des die Messer tragenden Rahmens um eine gestellfeste, horizontale Achse ähnlich einer Wippe wird jedoch bevorzugt, weil sie besonders einfach verwirklicht werden kann. Auf dem Rahmen bzw. der Wippe kann sich neben den Messern noch der Antrieb, also der Antriebsmotor, und das die Messer verbindende Getriebe befinden.

Vorzugsweise verläuft die Rahmendrehachse über der Förderbandebene, so daß sich das Förderband und der Rahmen nicht gegenseitig behindern.

. . Der Rahmen kann durch eine Kolben-Zylinder-Einheit antreibbar sein. Die Schwenkbewegung des Rahmens um die Rahmendrehachse erfolgt also pneumatisch oder hydraulisch gesteuert durch die Kolben-Zylinder-Einheit.

Vorzugsweise ist das Förderband intermittierend antreibbar und sind die Messer bzw. der diese tragende Rahmen in den Förderpausen des Förderbandes absenkbar und wieder anhebbar. Im Betrieb wird also das Förderband in Bewegung gesetzt, bis sich unbearbeitete Teigstücke unterhalb der Messer befinden. Anschließend wird das Förderband angehalten, und die Messer werden auf das Förderband zubewegt. Nachdem die Einschnitte vollständig in der Oberfläche der Teigstücke angebracht worden sind, werden die Messer wieder angehoben. Jetzt kann sich auch das Förderband wieder in Bewegung setzen, die fertig eingeschnittenen Teigstücke abtransportieren und die nächsten, noch unbearbeiteten Teigstücke in die Bearbeitungsposition bringen. Die Koordination dieser Bewegungen wird dabei auf übliche Weise gesteuert.

Eine weitere vorteilhafte Weiterbildung ist dadurch gekennzeichnet, daß auf dem Rahmen ein gerades, längliches Messer angeordnet ist. Dieses Messer kann aus zwei parallelen, gegenläufig antreibbaren, vorzugsweise gezahnten Klingen bestehen. Hierdurch wird die Vorrichtung noch flexibler einsetzbar. Es ist möglich, wahlweise die rotierenden Messer oder das gerade Messer einzusetzen. Mit dem geraden Messer, das sich vorzugsweise über die gesamte Förderbreite des Förderbandes erstreckt, kann ein einziger länglicher Schnitt über alle Teigstücke hinweg gemacht werden.

Vorzugsweise sind die rotierenden Messer und das gerade Messer auf einem Lagerrahmen gelagert, der an dem Rahmen um eine horizontale, über dem Förderband verlaufende Schwenkachse drehbar gelagert ist. Vorteilhaft ist es, wenn die rotierenden Messer und das gerade Messer auf dem Lagerrahmen vorzugsweise um 180° relativ zur Lagerrahmen-Schwenkachse versetzt angeordnet sind.

Der Lagerrahmen kann dann, vorzugsweise über einen entsprechenden Hebel von Hand, je nach Bedarf in diejenige Lage verschwenkt werden, in der die rotierenden Messer in Eingriff gelangen, oder in diejenige Lage, in der das gerade Messer in Eingriff kommt. Der Lagerrahmen ist vorzugsweise in jeder dieser beiden Eingriffsstellungen arretierbar.

Vorzugsweise ist das gerade Messer in einer Messerführung längsverschieblich gelagert. Es ist vorteilhaft, wenn in der Messerführung ein vorzugsweise verstellbarer Anschlag zur Begrenzung der Bewegung des Messers in der Messerführung vorgesehen ist. Das Messer kann dabei in der Messerführung durch mindestens eine Feder in Richtung nach außen belastet sein. Wenn das gerade Messer zur Erzeugung eines Schnitts auf das Förderband und die darauf befindlichen Teigstücke zu bewegt wird, wird dieses gerade Messer in der Messerführung entgegen der Kraft der Federn herabgedrückt. Diese Bewegung des Messers in der Messerführung wird durch den verstellbaren Anschlag begrenzt. Durch die Verstellbarkeit des Anschlags kann also die Schnittiefe eindeutig festgelegt werden. Es ist möglich, durch eine Verstellung des Anschlages die Schnittiefe den jeweiligen Teigstücken bzw. deren Höhe anzupassen.

Ausführungsbeispiele der Erfindung werden nachstehend anhand der beigefügten Zeichnung im einzelnen erläutert. In dieser zeigt

Fig. 1 ein Ausführungsbeispiel in einer Seitenansicht,

Fig. 2 das in Fig. 1 gezeigte Ausführungsbeispiel in einer Ansicht von oben,

Fig. 3 ein weiteres Ausführungsbeispiel in einer Ansicht von vorne,

Fig. 4 das in Fig. 3 gezeigte Ausführungsbeispiel in einer Ansicht von oben und

Fig. 5 das in den Figuren 3 und 4 gezeigte Ausführungsbeispiel in einer Seitenansicht.

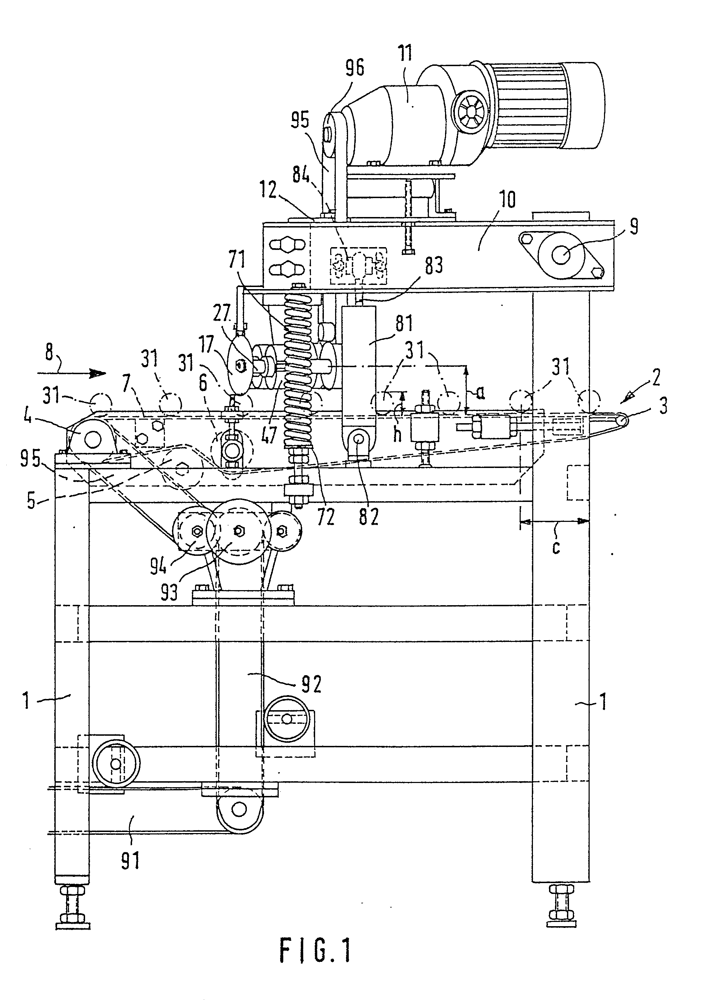

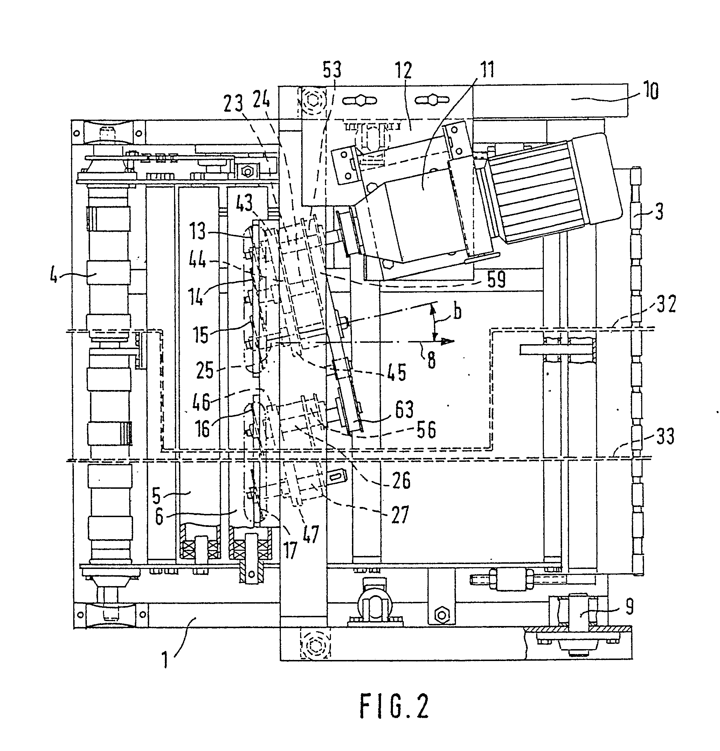

Bei dem in den Figuren 1 und 2 gezeigten Ausführungsbeispiel befindet sich im oberen Bereich eines Rahmens 1 ein Förderband 2, welches um Rollen 3, 4, 5, 6 geführt ist. Das Obertrum 7 des Förderbandes 2 bewegt sich in Richtung des Pfeiles 8.

Um die gestellfeste, horizontale Achse 9 ist der Rahmen 10 drehbar gelagert. Mit dem Rahmen 10 ist der Antriebsmotor 11 verschraubt; er befindet sich über einer oberen Rahmenplatte 12. Unterhalb dieser Rahmenplatte 12 sind die Messer 13-17 angeordnet. Jeder dieser Messer ist mit jeweils einer Messerwelle 23-27 fest verbunden. Jede Messerwelle 23-27 ist in dem Rahmen 10 drehbar gelagert. Die Drehachsen der Messer 13-17 bzw. Messerwellen 23-27 verlaufen in einer horizontalen Ebene im jeweils gleichen Abstand a von dem Förderband 2 bzw. dessen Obertrum 7. Weiterhin sind sämtliche Messer 13 bis 17 in einer senkrecht zur Förderrichtung 8 der Teigstücke 31 verlaufenden Reihe angeordnet.

Die Messer sind zu Gruppen zusammengefaßt. Die erste Gruppe ist in Fig. 2 oben dargestellt. Sie besteht aus den Messern 13, 14 und 15. Insgesamt sind 10 solcher Dreiergruppen vorgesehen; in der Figur 2 ist jedoch nur die erste Gruppe vollständig dargestellt. Von der zweiten Gruppe ist das erste Messer 16 gezeichnet. Von der zehnten, also letzten Gruppe ist lediglich das letzte Messer 17 gezeigt. An den Doppellinien 32 und 33 ist also die zeichnerische Darstellung unterbrochen. Jede Messer-Drehachse ist relativ zur Förderrichtung 8 um den Winkel b) geneigt. Die Rotationsebene der Messer verläuft senkrecht zur jeweiligen Messerdrehachse.

Jede Messerwelle 23-27 trägt ein Zahnrad 43-47. Die Zahnräder einer Messergruppe greifen ineinander. Beispielsweise greifen die Zahnräder 43, 44, 45 der ersten Messergruppe 13, 14, 15 ineinander. Die Drehrichtung des jeweils mittleren Zahnrads und der zugehörigen Messers ist umgekehrt zum jeweils ersten und dritten Zahnrad. Für die erste Messergruppe bedeutet dies, daß sich das erste Zahnrad 43 und damit das erste Messer 13 beispielsweise im Uhrzeigersinn drehen. Das zweite Zahnrad 44 und das zweite Messer 14 drehen sich folglich entgegen dem Uhrzeigersinn. Durch die erneute, weitere Drehrichtungsumkehr drehen sich das dritte Zahnrad 45 und das dritte Messer 15 der ersten Messergruppe wieder im Uhrzeigersinn. Gleiches gilt entsprechend für die 9 anderen Messergruppen. Durch die Schrägstellung der Messerdrehachsen um den Winkel b) zur Förderrichtung 8 nimmt der Abstand des jeweiligen Zahnrades zum zugehörigen Messer auf der jeweiligen Messerwelle innerhalb einer Messergruppe zu. Der Abstand zwischen dem zweiten Messer 14 der ersten Messergruppe und dem zugehörigen zweiten Zahnrad 44 ist also größer als der Abstand zwischen dem ersten Messer 13 der ersten Messergruppe und dem zugehörigen Zahnrad 43 auf der ersten Messerwelle 23. Der Abstand zwischen dem dritten Messer 15 der ersten Messergruppe und dem zugehörigen dritten Zahnrad 45 ist ebenfalls größer als der Abstand zwischen dem zweiten Messer 14 und dem zweiten Zahnrad 44. Da die Messer 13, 14, 15 der ersten Messergruppe jeweils gleichbeabstandet sind, nimmt auch der jeweilige Abstand zwischen den Messern und den zugehörigen Zahnrädern linear zu, um zu gewährleisten, daß die Zahnräder miteinander fluchten.

Die erste Messerwelle jeder Messergruppe besitzt darüber hinaus ein weiteres Zahnrad, welches dazu dient, den Antrieb auf die nächste Messergruppe weiterzuleiten. Entsprechend ist auf der ersten Messerwelle jeder nachfolgenden Messergruppe ein Zahnrad vorhanden. Die beiden letztgenannten Zahnräder sind durch eine Zahnriemen miteinander verbunden. Für die Weiterleitung des Antriebs von der ersten Messergruppe zur zweiten Messergruppe bedeutet dies: Die erste Messerwelle 23 der ersten Messergruppe 13, 14, 15 trägt das weitere Zahnrad 53. Die erste Messerwelle 26 der zweiten Messergruppe trägt das weitere Zahnrad 63. Die Zahnräder 53 und 63 sind durch den Zahnriemen 59 miteinander verbunden. Die ersten Messerwelle 26 der zweiten Messergruppe trägt weiterhin ein Zahnrad 56, welches die Drehbewegung zur dritten, nicht gezeichneten Messergruppe weiterleitet. Jede erste Messerwelle der ersten bis zur neunten Messergruppe trägt also ein den Zahnrädern 53 und 56 entsprechendes Zahnrad zur Weiterleitung der Drehbewegung zur jeweils nächsten Messergruppe. Jede erste Messerwelle der zweiten bis zur zehnten Messergruppe trägt ein dem Zahnrad 63 entsprechendes Zahnrad zum Empfang der Drehbewegungs-Weiterleitung von der vorhergehenden Messergruppe. Durch diese Ausgestaltung wird es möglich, sämtliche 30 Messer durch einen einzigen Antriebsmotor anzutreiben. Die Weiterleitung der Drehbewegungen durch Zahnräder und Zahnriemen bzw. ineinandergreifende Zahnräder stellt sicher, daß auch das letzte Messer der letzten Messergruppe noch in eine ausreichende Drehbewegung versetzt wird. Dies wäre bei Riementrieben aufgrund des unvermeidlichen Schlupfes nicht unter allen Umständen sicher gewährleistet. Die schlupffreien Zahnradgetriebe und Zahnrad-Zahnriemen-Getriebe ermöglichen jedoch eine zuverlässige Kraftübertragung und Drehzahlübertragung.

Durch die beschriebene Ausgestaltung ist die Vorrichtung weiterhin modular aufgebaut. Es werden also mehrere gleiche, wiederkehrende Bauteile verwendet, wodurch die Herstellungskosten gesenkt werden können.

Der um die gestellfeste, horizontale Achse 9 drehbar gelagerte Rahmen 10 ist durch die Feder 71 abgestützt. Das untere Ende der Feder stützt sich an einem gestellfesten Anschlag 72 ab, während das obere Ende mit dem Rahmen 10 verschraubt ist. Die Federkonstante der Feder 71 und deren Einspannung sind dabei so gewählt, daß die Messer etwa im Bereich der Teigstücke zu liegen kommen. In Fig. 1 sind mehrere Teigstücke mit der Höhe h im Abstand c voneinander dargestellt. Das scheibenförmige, rotierende Messer 17 schneidet in der in Fig. 1 gezeigten Stellung in die Oberfläche eines Teigstücks 31 ein. Der Abstand zwischen der Unterkante des Messers 17 und dem Obertrum 7 des Förderbandes 2 ist also geringer als die Höhe h der auf dem Obertrum 7 des Förderbandes 2 liegenden Teigstücke 31.

Mit dem Gestell 1 ist der Zylinder 81 einer Kolben-Zylinder-Einheit um eine quer zur Förderrichtung 8 verlaufende, horizontale Achse 82 gelenkig verbunden. Die Kolbenstange 83 eines in dem Zylinder 81 längsverschieblich geführten Kolbens ist mit dem Rahmen 10 um eine horizontale, parallel zur Förderrichtung 8 verlaufende Achse 84 schwenkbar verbunden. Durch eine beispielsweise hydraulisch gesteuerte Bewegung des Kolbens in dem Zylinder 81 kann also der Rahmen 10 um die Rahmendrehachse 9 verschwenkt werden. Mit dem Rahmen bewegen sich der Antriebsmotor 11 und die Messer 17. Durch die Belastung bzw. Abstützung der Druckfeder 71 lastet nicht das gesamte Gewicht des Rahmens 10 und seiner Aufbauten auf der Kolben-Zylinder-Einheit 81, 83.

Der Antrieb des Förderbandes 2 erfolgt durch den waagerechten Riementrieb 91 und den daran anschließenden senkrechten Riementrieb 92 sowie die Zahnräder 93 und 94 und den Riementrieb 95, der die Welle 4 antreibt.

Im Betrieb wird das Förderband 2 in Förderrichtung 8 um die Strecke c vorwärtsbewegt, bis eine Reihe unbearbeiteter Teigstücke 31 unterhalb der Messer 13-17 zu liegen kommt. Anschließend wird der Rahmen 10 durch die Aktion der Kolben-Zylinder-Einheit 81, 83 um die Rahmendrehachse 9 nach unten verschwenkt, bis die Messer 13-17 die in Fig. 1 gezeigte Stellung einnehmen. In dieser Stellung ist der Abstand der Unterseite der Messer von dem Obertrum 7 des Förderbandes 2 geringer als die Höhe h der Teigstücke 31, so daß die Messer in die Oberfläche der Teigstücke einschneiden. Anschließend wird der Rahmen 10 durch die Aktion der Kolben-Zylinder-Einheit 81, 83 um die Rahmendrehachse 9 nach oben verschwenkt, so daß die Messer wieder außer Eingriff gelangen. Jetzt kann das Förderband 2 in Förderrichtung 8 erneut um den Abstand c vorwärtsbewegt werden, so daß die nächste Reihe unbearbeiteter Teigstücke unter die Messer zu liegen kommt, worauf der oben beschriebene Vorgang erneut beginnt. Das Förderband 2 wird also intermittierend vorwärtsbewegt, und die Messer bzw. der diese tragende Rahmen wird in den Förderpausen des Förderbandes abgesenkt und anschließend wieder angehoben.

Wie aus Fig. 2 ersichtlich, überlappen sich die Messer einer Messergruppe: Der Abstand zwischen der ersten Messerwelle 23 der ersten Messergruppe und der zweiten Messerwelle 24 ist geringer als der Durchmesser der Messerscheiben 13 bzw. 14. Diese Überlappung wird durch die Schrägstellung der Messerdrehachsen zur Förderrichtung 8 um den Winkel b ermöglicht.

Die erste Messerwelle 23 der ersten Messergruppe 13, 14, 15 trägt ein weiteres Rad, um das der senkrecht verlaufende Antriebsriemen 95 geschlungen ist. Das andere Ende dieses endlosen Antriebsriemens 95 umschlingt die Abtriebswelle 96 des Antriebsmotors 11. Der Antrieb des Motors 11 wird also über die Motorwelle 96 und den Antriebsriemen 95 auf das weitere Antriebsrad der ersten Messerwelle 23 übertragen. Der Riemen 95 kann ein Zahnriemen sein.

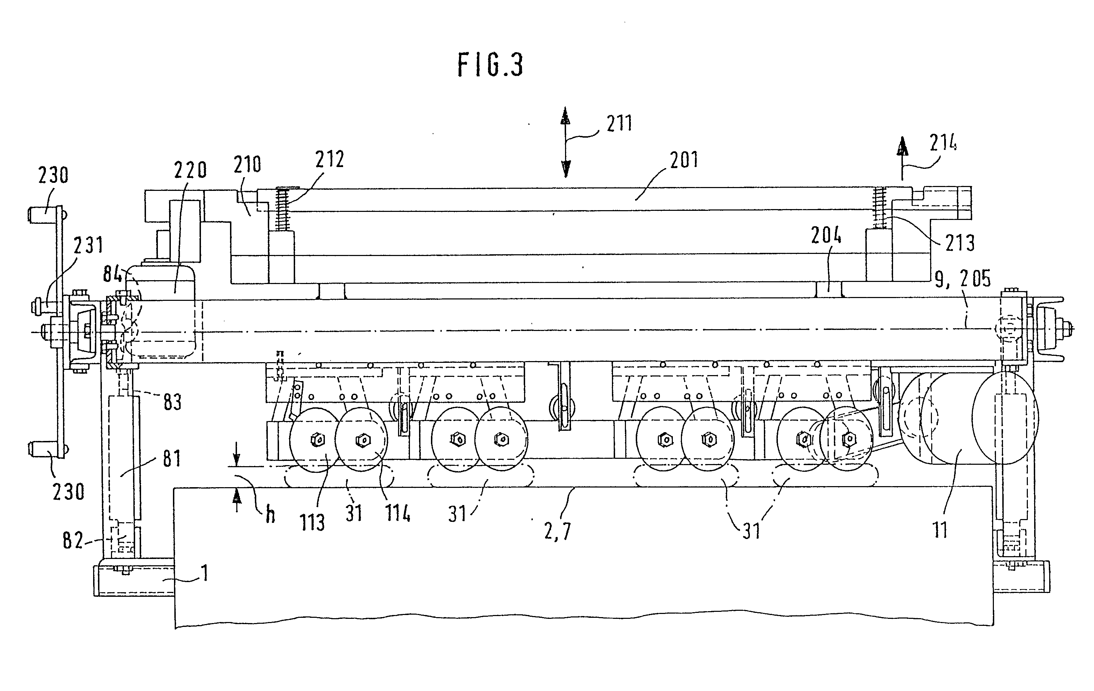

Bei dem in den Figuren 3, 4 und 5 gezeigten, weiteren Ausführungsbeispiel sind die mit dem Ausführungsbeispiel nach den Figuren 1 und 2 übereinstimmenden Teile mit den gleichen Bezugsziffern versehen, so daß insoweit auf die obige Beschreibung verwiesen werden kann. Der wesentliche Unterschied besteht darin, daß bei dem Ausführungsbeispiel nach den Figuren 3 bis 5 neben den rotierenden Messern noch zusätzlich ein gerades, längliches Messer vorhanden ist.

An der Oberseite des Gestells 1 befindet sich ein Förderband 2, dessen Obertrum 7 in Richtung des Pfeiles 8 intermittierend bewegt wird. Um die gestellfeste, horizontale Achse 9 ist der Rahmen 10 drehbar gelagert. Mit dem Rahmen 10 ist der Antriebsmotor 11 verschraubt. Weiterhin sind die Messer 113-120 auf dem Rahmen 10 angeordnet. Jedes dieser Messer ist mit einer Messerwelle fest verbunden, von denen in den Figuren 3 bis 5 nur die Messerwellen 123 und 124 für die Messer 113 und 114 mit Bezugszeichen versehen sind.

In den Figuren 3 bis 5 befinden sich die rotierenden Messer 113-120 in Eingriffstellung. Die scheibenförmigen, rotierenden Messer schneiden in die Oberfläche der auf dem Förderband 2 liegenden Teigstücke 31 ein. Der Abstand der äußeren Umfangsfläche der rotierenden Messer von dem Förderband 2 ist also geringer als die Höhe h der Teigstücke 31.

Mit dem Gestell 1 ist der Zylinder 81 einer Kolben-Zylinder-Einheit um eine quer zur Förderrichtung 8 verlaufende, horizontale Achse 82 gelenkig verbunden. Die Kolbenstange 83 eines in dem Zylinder 81 längsverschieblich geführten Kolbens ist mit dem Rahmen 10 um eine horizontale, parallel zur Förderrichtung 8 verlaufende Achse 84 schwenkbar verbunden. Durch die pneumatisch oder hydraulisch gesteuerte Bewegung des Kolbens in dem Zylinder kann also der Rahmen 10 um die Rahmendrehachse 9 verschwenkt werden. Mit dem Rahmen bewegen sich der Antriebsmotor 11 und die Messer 113-120.

Auf dem Rahmen 10 ist neben den rotierenden Messern 113-120 ein gerades, längliches Messer 201 angeordnet. Dieses gerade Messer 201 besteht aus zwei parallelen, gegenläufig antreibbaren, gezahnten Klingen 202, 203. Die rotierenden Messer 113-120 und das gerade Messer 201 sind auf einem Lagerrahmen 204 gelagert, der an dem Rahmen 10 um die horizontale, über dem Förderband 2. 7 verlaufende Schwenkachse 205 drehbar gelagert ist. Die rotierenden Messer 113-120 und das gerade Messer 201 sind auf dem Lagerrahmen 204 um 180˚ relativ zur Lagerrahmen-Schwenkachse 205 versetzt angeordnet.

Das gerade Messer 201 ist in einer Messerführung 210 längsverschieblich geführt. Das gerade Messer 201 kann also längs des Doppelpfeils 211 nach oben bzw. unten bewegt werden. In der Messerführung 210 ist ein verstellbarer Anschlag zur Begrenzung der Bewegung des Messers 201 in der Messerführung 210 vorgesehen; dieser verstellbare Anschlag ist in den Zeichnungen nicht dargestellt. Weiterhin ist das gerade Messer 201 in der Messerführung 210 durch zwei Druckfedern 212, 213 in Richtung nach außen, also in Richtung des Pfeiles 214, vorbelastet. Die beiden Druckfedern 212, 213 befinden sich jeweils in der Nähe der Enden des geraden Messers 201. Die Druckfedern 212, 213 werden von jeweils einem Bolzen geführt, der fest mit dem Schwenkrahmen 204 verbunden ist. Durch die Druckfedern 212, 213 wird das gerade Messer 201 gegen einen Anschlag in der Messerführung 210 gedrückt.

Die beiden gezahnten Klingen 202, 203 des geraden Messers 201 werden durch den Antriebsmotor 220 gegenläufig angetrieben. Durch eine Drehung des Lagerrahmens 204 um 180˚ um die Lagerrahmen-Drehachse 205 kann das gerade Messer 201 in Eingriff gebracht werden. Dieses gerade Messer 201 erstreckt sich über die gesamte Förderbreite des Förderbandes 2. Durch eine Kippbewegung des Rahmens 10 um die Rahmendrehachse 9 kann dann das gerade Messer 201 - ebenso wie die rotierenden Messer 113-120- in Eingriff und außer Eingriff gebracht werden. In der Eingriffsstellung des geraden Messers werden die beiden Messerklingen 202, 203 gegenläufig bewegt, so daß ein einziger länglicher Schnitt über alle Teigstücke hinweg entsteht.

Wenn das Messer 201 durch eine Drehbewegung des Rahmens 10 um die Rahmendrehachse 9 nach unten bewegt wird, wird dieses Messer 201 gleichzeitig entgegen der Kraft der Druckfedern 212, 213 an den Anschlag innerhalb der Messerführung 210 gedrückt. Der Anschlag innerhalb der Messerführung 210 ist dabei derart eingestellt, daß die gewünschte Schnittiefe in den Teigstücken 31 erreicht wird. Die Schnittiefe kann dadurch eindeutig festgelegt werden.

Die Verstellung des Lagerrahmens 204, also dessen Verdrehung um 180˚ um die Lagerrahmen-Drehachse 205, erfolgt durch den Handgriff 230. Ein mit dem Handgriff 230 verbundener Bolzen 231 dient im Zusammenwirken mit zwei entsprechenden Bohrungen der Arretierung des Lagerrahmens 204 in jeder seiner beiden Stellungen. Es ist eine Nockensteuerung vorgesehen, die einen elektropneumatischen Schalter betätigt, um zu gewährleisten, daß sich die Teigstücke 31 während des Schneidevorgangs des geraden Messers 201 nicht fortbewegen. Die Steuerung ist derart ausgestaltet, daß gewährleistet ist, daß der gesamte Schneidvorgang des geraden Messers 201 während des Stillstandes der Teigstücke, also während des Stillstandes des Förderbandes, abgeschlossen wird.

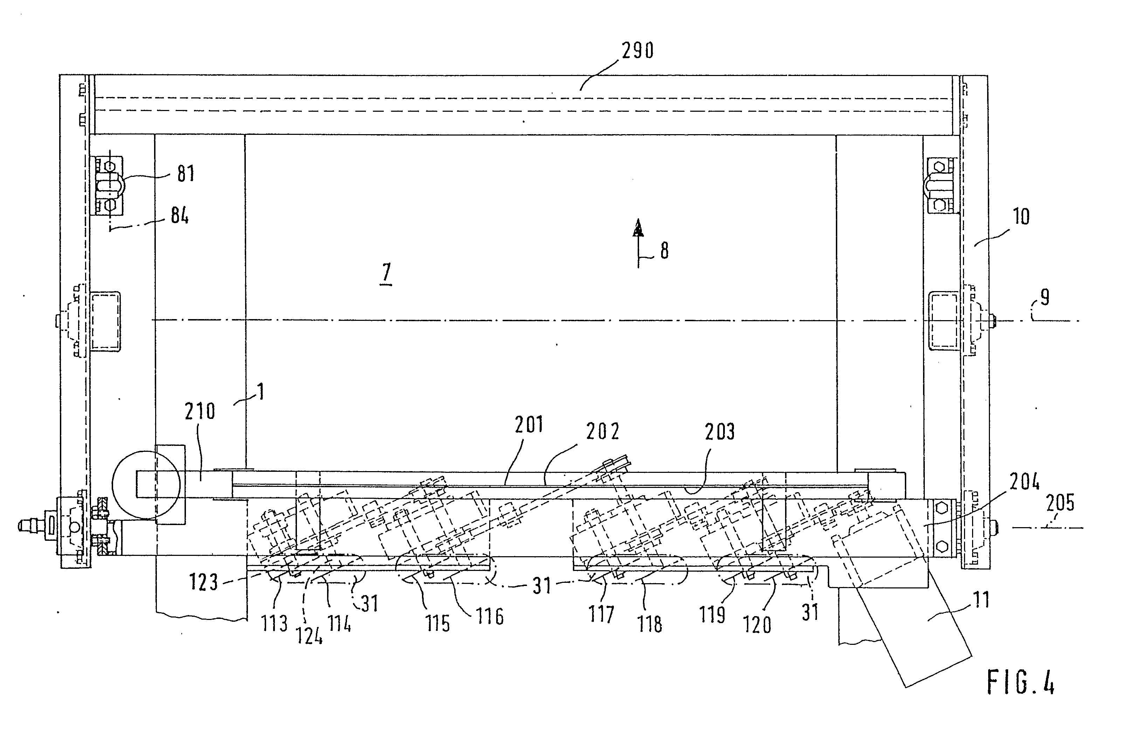

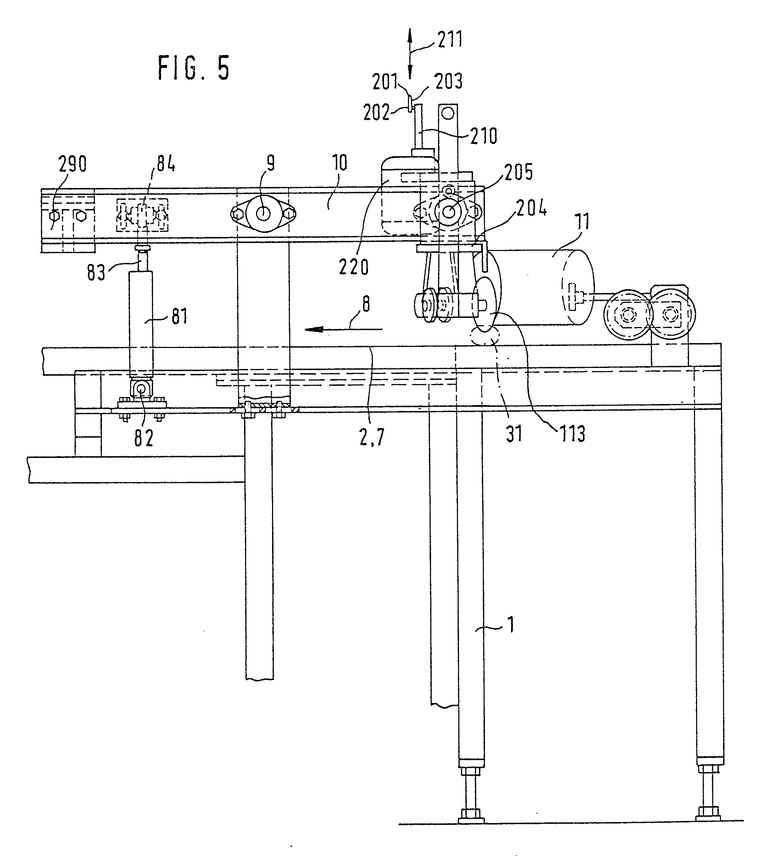

Wie insbesondere aus den Figuren 4 und 5 ersichtlich, ist an dem den Messern 113, 201 gegenüberliegenden Ende des Rahmens 10 ein Gegengewicht 290 angeordnet. Der Abstand dieses Gegengewichts 290 von der Rahmendrehachse 9 und auch die Größe dieses Gegengewichts sind derart gewählt, daß der Rahmen 10 austariert ist, daß also dieses Gegengewicht 290 ein Gleichgewicht um diese Rahmendrehachse 9 erzeugt. Hierdurch lassen sich die von der Kolben-Zylinder-Einheit 81 aufzubringenden Kräfte auf ein Minimum reduzieren.

**Ansprüche**

1. Gebäck-Einschneidevorrichtung zum Einschneiden von Teigstücken an ihrer Oberfläche, **gekennzeichnet durch**
ein horizontales Förderband (2) zum Fördern der Teigstücke (31), vorzugsweise in mehreren nebeneinanderliegenden Reihen,
mehrere Messer (13-17), die über die Breite des Förder bandes (2) verteilt und von diesem beabstandet angeordnet sind, und
einen Antrieb zum Antreiben der Messer,
wobei die Messer (13-17) auf das Förderband (2) zu und von diesem weg bewegbar sind.

2. Gebäck-Einschneidevorrichtung nach Anspruch 1, gekennzeichnet durch mehrere um je eine vorzugsweise horizontale Achse rotierende Messer (13-17).

3. Gebäck-Einschneidevorrichtung nach Anspruch 1 oder 2, gekennzeichnet durch ein Getriebe, durch das die Bewegung bzw. Drehbewegung der Messer (13-17) miteinander gekoppelt ist.

4. Vorrichtung nach einem der vorhergehenden Ansprüche, dadurch gekennzeichnet, daß die Messer (13-17) in einer senkrecht zur Förderrichtung (8) der Teigstücke (31) verlaufenden Reihe angeordnet sind und/oder daß die Messer (13-17) jeweils den gleichen Abstand (a) von dem Förderband (2) aufweisen und/oder daß der Abstand (a) der Messer (13-17) von dem Förderband (2) verstellbar ist.

5. Vorrichtung nach einem der Ansprüche 2 bis 4, dadurch gekennzeichnet, daß die Messer-Drehachsen im Winkel (b) zur Förderrichtung (8) der Teigstücke (31) verlaufen.

6. Vorrichtung nach einem der Ansprüche 3 bis 5, dadurch gekennzeichnet, daß das die Messer-Drehbewegungen koppelnde Getriebe (43-47; 53, 59, 63; 56; 43-47) aus Zahnrädern (43-47; 53, 63; 56) und/oder Zahnriemen (59) besteht.

7. Vorrichtung nach einem der vorhergehenden Ansprüche, dadurch gekennzeichnet, daß jeweils mehrere Messer zu einer Messergruppe (13, 14, 15) zusammengefaßt sind, wobei vorzugsweise die Drehbewegungen der Messer einer Messergruppe (13, 14, 15) durch ein mit der jeweils zugehörigen Messerwelle (23, 24, 25) fest verbundenes Zahnrad (43, 44, 45) miteinander gekoppelt sind, wobei vorzugsweise jeweils eines der Messer (13) jeder Messergruppe (13, 14, 15) mit jeweils einem Messer (16) der nachfolgenden Messergrupe durch ein Getriebe (53, 59, 63), vorzugsweise ein Zahnriemen-Getriebe verbunden ist.

8. Vorrichtung nach einem der vorhergehenden Ansprüche, dadurch gekennzeichnet, daß die Messer (13-17) mit einem Rahmen (10) verbunden sind, der um eine gestellfeste, horizontale Achse drehbar gelagert ist, wobei die Rahmendrehachse (9) vorzugsweise über der Förderbandebene (7) verläuft, und wobei der Rahmen (10) vorzugsweise durch eine Kolben-Zylinder-Einheit (81, 83) antreibbar ist.

9. Vorrichtung nach einem der vorhergehenden Ansprüche, dadurch gekennzeichnet, daß das Förderband (2) intermittierend antreibbar ist und daß die Messer (13-17) bzw. der diese tragende Rahmen (10) in den Förderpausen des Förderbandes (2) absenkbar und wieder anhebbar sind.

10. Vorrichtung nach Anspruch 8 oder 9, dadurch gekennzeichnet, daß auf dem Rahmen (10) ein gerades, längliches Messer (201) angeordnet ist, wobei das gerade Messer (201) vorzugsweise aus zwei parallelen, gegenläufig antreibbaren, vorzugsweise gezahnten Klingen (202, 203) besteht, wobei vorzugsweise die rotierenden Messer (113-120) und das gerade Messer (201) auf einem Lagerrahmen (204) gelagert sind, der an dem Rahmen (10) um eine horizontale, über dem Förderband verlaufende Schwenkachse (205) drehbar gelagert ist, und wobei vorzugsweise die rotierenden Messer (113-120) und das gerade Messer (201) auf dem Lagerrahmen (204) vorzugsweise um 180° relativ zur Lagerrahmen-Schwenkachse (205) versetzt angeordnet sind.

11. Vorrichtung nach Anspruch 10, dadurch gekennzeichnet, daß das gerade Messer (201) in einer Messerführung (210) längsverschieblich geführt ist, wobei vorzugsweise in der Messerführung (210) ein vorzugsweise verstellbarer Anschlag zur Begrenzung der Bewegung des geraden Messers (201) in der Messerführung (210) vorgesehen ist, und wobei vorzugsweise das gerade Messer (210) in der Messerführung (210) durch mindestens eine Feder (212, 213) in Richtung nach außen (214) belastet ist.

12. Vorrichtung nach einem der Ansprüche 8 bis 11, dadurch gekennzeichnet, daß auf der den Messern gegenüberliegenden Seite der Rahmendrehachse (9) ein Gegengewicht (290) angeordnet ist.

**F I G.1**

EP 0 341 599 A1

FIG.2

FIG.3

FIG.4

EP 0 341 599 A1

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 581 971 (L.S. HICKMAN et al.) * Spalte 3, Zeile 1 - Spalte 5, Zeile 21; Figuren 1-4 * | 1-4,8,9 | A 21 C 11/12 |
| Y | | 5-7 | |
| | --- | | |
| Y | FR-A-2 607 051 (G. EIDEL et al.) * Seite 3, Zeilen 20-35; Figur 1 * | 5-7 | |
| | --- | | |
| A | FR-A-2 405 019 (SOCIETE DE FRANCAISE DE PANIFICATION ET DE PATISSERIE LYON-SOFRAPAIN LYON) * Seite 4, Zeilen 18-25; Figur 1 * | 12 | |
| | --- | | |
| A | FR-A-2 340 050 (J. ECHEGOYER TOLOSA) * Seite 4, Zeilen 3-15; Figur 2 * | 5,6 | |
| | --- | | |
| A | EP-A-0 202 181 (F. GEYER) ----- | | |

RECHERCHIERTE
SACHGEBIETE (Int. Cl.4)

A 21 C

Der vorliegende Recherchenbericht wurde für alle Patentansprüche erstellt

| Recherchenort | Abschlußdatum der Recherche | Prüfer |
|---|---|---|
| DEN HAAG | 18-08-1989 | FRANKS N.M. |